# FASCICULE DE BREVET EUROPEEN

(11) **EP 3 629 716 B1**
(45) Date de publication et mention de la délivrance du brevet: **17.04.2024**
(21) Numéro de dépôt: 18724594.9
(22) Date de dépôt: 23.05.2018
(51) Int. Cl.: A01K 61/55

(54) **DISPOSITIF ET PROCEDE D'ELEVAGE DE MOLLUSQUES**
VORRICHTUNG UND VERFAHREN FÜR MOLLUSKENFARM
MOLLUSC FARMING DEVICE AND METHOD

(30) Priorité: 24.05.2017 FR 1754602
(43) Date de publication de la demande: 08.04.2020
(73) Titulaire: SEADUCER, 17220 Saint-Médard d'Aunis (FR)
(72) Inventeur: BOSMANS, Jérôme Marc Philippe, 34560 Poussan (FR); VAUCHEZ, François-Eric, 17540 Verines (FR)
(74) Mandataire: Fantin, Laurent
(86) Numéro de dépôt international: PCT/EP2018/063462
(87) Numéro de publication internationale: WO 2018/215517

(56) Documents cités:
- EP-A1- 2 810 556
- WO-A1-96/31117
- FR-A1- 2 576 484
- FR-A1- 2 908 013
- FR-A1- 3 003 128
- JP-A- 2005 253 424
- US-A1- 2011 265 730

## Description

La présente demande se rapporte à un dispositif et à un procédé d'élevage de mollusque plus particulièrement adapté à l'élevage des huîtres.

Selon une technique d'élevage, les huîtres sont placées dans des poches en grillage plastique qui sont disposées sur des structures surélevées appelées tables.

Ces structures surélevées sont judicieusement positionnées au niveau de l'estran pour que les huîtres soient soumises à un phénomène d'exondation en raison des marées.

Durant cette phase d'élevage, les poches sont régulièrement retournées et nettoyées afin que les huîtres puissent croître dans de bonnes conditions et avoir des formes régulières. Ces opérations de retournement des poches ne sont pas mécanisées et sont réalisées manuellement. Elles sont longues et fastidieuses.

Après une période plus ou moins longue en fonction de leur croissance et de leurs qualités organoleptiques recherchées, les huîtres sont retirées de l'eau, détroquées, nettoyées et triées en fonction de leurs catégories de taille.

Dans certaines zones de production, après cette phase d'élevage sur l'estran, les huîtres adultes sont affinées dans des bassins d'affinage appelés claires, en immersion permanente sur une période plus ou moins longue (de quelques semaines à plusieurs mois), pour améliorer leurs qualités organoleptiques, la taille de leur coquille et la couleur de leur chair. Cette technique d'élevage n'est pas pleinement satisfaisante. En effet, la zone de production sur l'estran n'est pas une zone sûre sur le plan sanitaire. Ainsi, la production des huîtres peut être affectée par des facteurs environnementaux tels que la pollution ou par des maladies.

Pour remédier à cette problématique, une solution consiste à élever les huîtres dans un environnement clos ou semi-clos, constitué de claires, pour mieux maîtriser les caractéristiques nutritionnelles et l'aspect sanitaire. Cependant, il est nécessaire pour assurer un développement optimal de la coquille et du muscle des huîtres de les soumettre à un phénomène d'exondation et de brassage (ou de roulage) en reproduisant les effets de la marée. Le niveau de l'eau étant constant, il est nécessaire de déplacer les huîtres verticalement et alternativement.

Le document EP1679958 décrit un système d'élevage de mollusques comprenant quatre ballasts cylindriques et verticaux qui supportent un châssis constitué entre autre de parois ajourées verticales qui forment un cadre ouvert à l'intérieur duquel sont positionnées des surfaces d'élevage superposées sur lesquelles sont placés les mollusques. En contrôlant la vidange et le remplissage des ballasts, il est possible d'immerger plus ou moins les surfaces d'élevage. Le document JP 2005253424 A décrit un autre système d'élevage selon le préambule de la revendication 1.

Même si ce système d'élevage peut convenir pour provoquer un phénomène d'exondation, il ne peut fonctionner qu'avec une hauteur d'eau importante au large de la côte ce qui ne permet pas de maîtriser les caractéristiques nutritionnelles et les conditions sanitaires de l'environnement de production.

Selon un autre inconvénient, un tel système d'élevage ne permet pas de stimuler les huîtres pour qu'elles développent une coquille plus épaisse et un muscle plus gros car il n'existe aucun phénomène de brassage et de roulage.

Enfin, ce système d'élevage ne permet pas d'obtenir une croissance homogène des huîtres. En effet, les huîtres ne sont pas régulièrement retournées et brassées comme quand elles sont conditionnées dans des poches retournées régulièrement.

Le document FR2576484 décrit un appareil d'élevage de mollusques qui comprend une cage, avec des parois grillagées, montée pivotante autour d'un axe fixe et pourvue d'un flotteur. Grâce au flotteur, la cage pivote autour de l'axe fixe en fonction de la hauteur d'eau. Ce type d'appareil ne permet pas d'obtenir un roulage efficace en raison de la montée de l'eau très lente liée à la marée. De plus, cette action ne peut être contrôlée et répliquée en dehors des périodes de mouvements des marées c'est-à-dire un maximum de quatre fois par jour.

La présente invention vise à remédier aux inconvénients de l'art antérieur.

A cet effet, l'invention a pour objet un dispositif d'élevage de mollusques selon la revendication 1.

Le phénomène de roulage répété rend les coquilles des huîtres plus lisses et dépourvues de dentelles et permet d'obtenir une croissance plus homogène avec un meilleur ratio longueur/largeur/épaisseur. Selon un autre avantage, il supprime les opérations fastidieuses de retournement et de détroquage. Le stress procuré par le phénomène de roulage combiné à un phénomène d'exondation renforce le muscle de l'huître et contribue à ce que les huîtres développent une coquille plus épaisse avec une nacre plus blanche et brillante. Cela permet aussi que les huîtres stimulées et stressées fassent plus de réserve et ainsi améliorent aussi leurs taux de chair et leurs qualités organoleptiques.

Selon une configuration, le dispositif d'élevage comprend deux ballasts disposés de part et d'autre de l'axe de pivotement et reliés par leurs bras respectifs à ce dernier. Cette configuration permet d'équilibrer les efforts sur l'axe de pivotement et d'optimiser son utilisation.

Selon une autre caractéristique, l'axe de pivotement est flottant. Cette solution est plus particulièrement adaptée aux zones de production avec des hauteurs d'eau variables en raison notamment des marées.

Selon les variantes, l'axe de pivotement coulisse le long de poteaux ancrés au fond de l'eau ou est relié par des éléments de liaison souples à des corps-morts posés au fond de l'eau. L'invention a également pour objet un procédé d'élevage d'huîtres, conformément à la revendication 12, les huîtres étant conditionnées dans des contenants reliés à au moins un ballast orienté selon une direction longitudinale mobile entre une position haute et une position basse lors d'un remplissage ou d'une vidange du ballast. Le procédé se caractérise en ce que le ballast pivote autour d'un axe de pivotement, parallèle à la direction longitudinale, pour générer un phénomène de roulage.

Selon une autre caractéristique, les contenants sont hors de l'eau lorsqu'ils sont positionnés en position haute pour générer un phénomène d'exondation.

D'autres caractéristiques et avantages ressortiront de la description de l'invention qui va suivre, description donnée à titre d'exemple uniquement, en regard des dessins annexés sur lesquels :
- La figure 1 est une vue en perspective d'une installation d'élevage d'huîtres qui illustre un premier mode de réalisation de l'invention,
- La figure 2 est une vue en perspective d'un dispositif d'élevage d'huîtres qui illustre le premier mode de réalisation,
- La figure 3 est une vue de détails du dispositif d'élevage d'huîtres visible sur la figure 1,
- Les figures 4A à 4C sont des coupes transversales qui illustrent différents modes de fonctionnement d'un dispositif d'élevage d'huîtres,
- Les figures 5 et 6 sont des coupes transversales d'un dispositif d'élevage d'huîtres dans différentes positions qui illustrent un phénomène de roulage des huîtres, et
- Les figures 7 et 8 sont des sections d'un ballast, respectivement en position flottante et immergée, qui illustre un autre mode de réalisation de l'invention,
- La figure 9 est une vue en perspective d'une partie d'un dispositif d'élevage d'huîtres qui illustre un mode de réalisation de l'invention,
- Les figures 10 et 11 sont des schémas qui illustrent un mode de réalisation des fixations des contenants respectivement en position flottante et immergée,
- La figure 12 est un schéma qui illustre un autre mode de réalisation des fixations des contenants en position flottante,
- Les figures 13 et 14 sont des schémas qui illustrent un autre mode de réalisation des fixations des contenants respectivement en position flottante et immergée,
- La figure 15 est une vue en perspective d'une partie d'un dispositif d'élevage d'huîtres qui illustre un autre mode de réalisation de l'invention,
- Les figures 16 et 17 sont des coupes d'un contenant d'huîtres qui illustrent différentes variantes de l'invention, et
- Les figures 18A et 18B sont des coupes d'une partie d'un dispositif d'élevage d'huîtres qui illustrent un autre mode de réalisation, respectivement en position haute et en cours d'immersion.

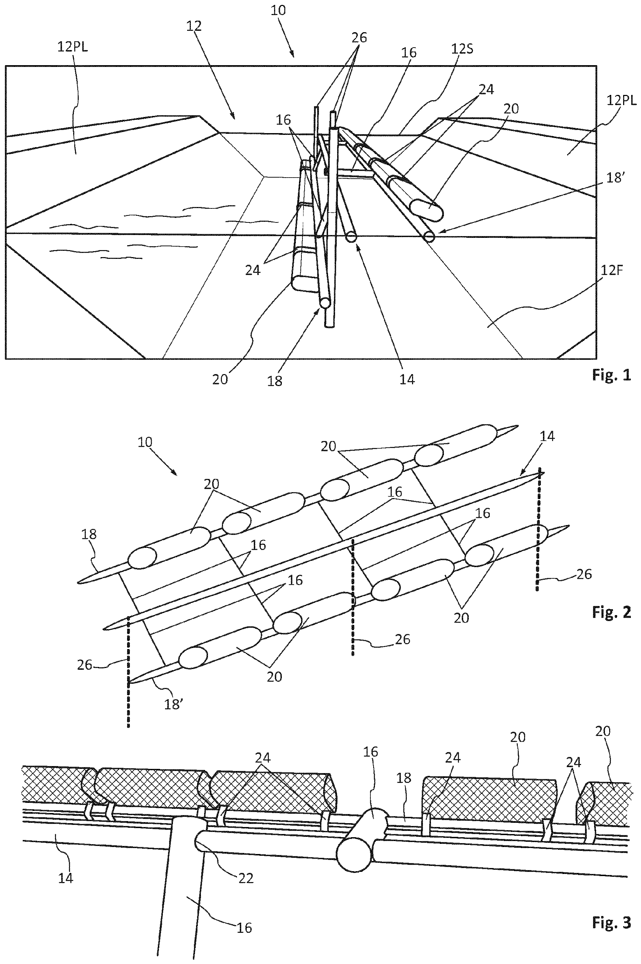

Sur la figure 1, une installation 10 d'élevage d'huîtres est positionnée dans un bassin d'élevage 12 clos, tel qu'une claire d'un marais par exemple. Selon d'autres exemples, l'invention peut être mise en oeuvre dans un étang, un bassin à terre (circuit fermé aquacole), une lagune ou toute autre étendue d'eau plus ou moins fermée et protégée. Cette solution permet de mieux contrôler les caractéristiques de l'environnement aquatique dans lequel sont produites les huîtres et in fine de limiter les risques sanitaires.

Ce bassin d'élevage 12 comprend un fond 12F et des parois latérales 12PL. Pour donner un ordre de grandeur, la surface de l'eau 12S est située à une hauteur de l'ordre de 1 à 2m au-dessus du fond 12F.

L'invention n'est aucunement limitée aux huîtres et pourrait être utilisée pour l'élevage d'autres mollusques. De plus, l'installation 10 d'élevage pourrait être installée sur un site en pleine mer.

Une installation 10 d'élevage d'huîtres comprend au moins un dispositif d'élevage d'huîtres qui comporte :
- un axe de pivotement 14 horizontal qui est parallèle à une direction longitudinale,
- au moins deux bras 16 rigides qui s'étendent selon une direction perpendiculaire à la direction longitudinale,
- au moins un ballast 18 qui s'étend selon une direction parallèle à la direction longitudinale, relié à l'axe de pivotement 14 par les bras 16, ledit ballast 18 étant mobile entre des positions plus ou moins immergées en fonction de son remplissage en eau et en air,
- au moins un contenant 20 configuré pour contenir des huîtres fixé au ballast 18.

Selon un mode de réalisation, chaque contenant 20 est un panier ajouré en polyéthylène haute densité PEHD pour lui conférer une rigidité. A titre indicatif, chaque contenant a une longueur comprise entre 0,5 m et 2m. Chaque contenant est dimensionné et rempli d'huîtres de sorte à pouvoir être manipulé et porté par une personne à l'issue de la phase d'élevage. La section peut être circulaire, ovale ou oblongue. De préférence, la section du contenant a un profil fermé courbe pour favoriser un phénomène de roulage précisé ultérieurement. Dans le cas d'une section non-circulaire, la plus grande dimension de la section peut être orientée verticalement lorsque le ballast 18 est en position haute pour favoriser le phénomène de roulage.

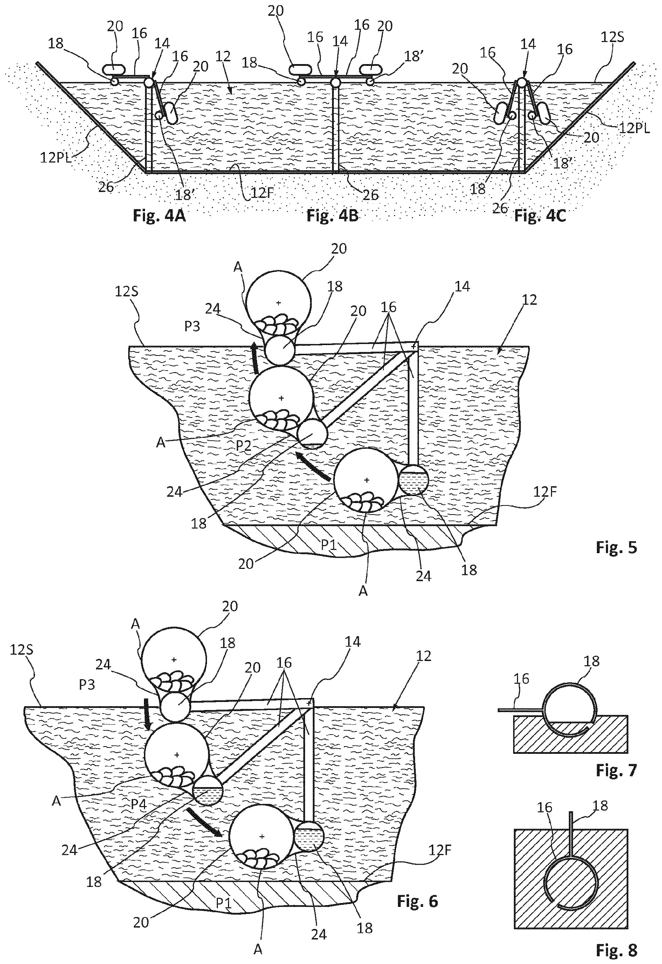

Le ballast 18 a une forme longiligne qui s'étend selon la direction longitudinale. Le ballast 18 est un tube, comme illustré sur les figures 5 et 6. Le diamètre du tube formant le ballast 18 dépend notamment du poids du contenant 20 lorsqu'il est rempli d'huîtres. A titre indicatif, le tube a un diamètre de l'ordre d'une dizaine de centimètres. Pour donner un ordre de grandeur, chaque ballast 18 a un diamètre d'environ 200 mm. Selon un autre mode de réalisation, chaque ballast 18 est un tube troué ou fendu sur sa longueur (parallèle à la direction longitudinale), comme illustré sur les figures 7 et 8.

Le ballast 18 peut être en polyéthylène haute densité PEHD.

Le ballast 18 peut comprendre un tronçon ou plusieurs tronçons étanches les uns par rapport aux autres. Chaque tronçon a une longueur comprise entre 1 et 50 m. De préférence, chaque tronçon a une longueur inférieure ou égale à 5 m pour obtenir une répartition de l'air dans le tronçon homogène sur toute sa longueur au moment du remplissage du ballast.

Selon un agencement et de manière non-limitative, les bras 16 sont disposés entre deux ou trois contenants 20 adjacents. Des bras 16 peuvent également être positionnés à chaque extrémité du ballast 18.

Les bras 16 permettent de transformer le mouvement de haut en bas des ballasts 18 en un mouvement de rotation autour de l'axe de pivotement 14 suite au remplissage et à la vidange des ballasts 18.

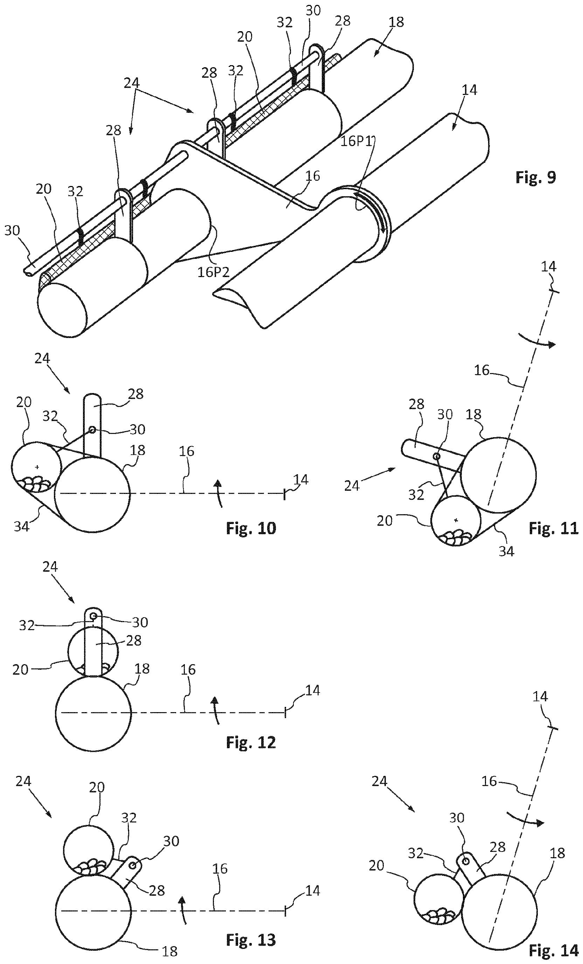

Chaque bras 16 comprend à une première extrémité une liaison rigide avec le ballast 18 et à une seconde extrémité une liaison pivotante avec l'axe de pivotement 14, comme illustré en détails sur la figure 9.

En variante, le bras 16 est relié au ballast 18 par une liaison pivotante comme pour l'axe de pivotement 14.

Selon un mode de réalisation visible sur la figure 3, chaque bras 16 est un tube rigide qui comprend, au niveau de son extrémité reliée à l'axe de pivotement 14, un trou transversal 22 (perpendiculaire à l'axe du tube) dans lequel pivote l'axe de pivotement 14.

Selon un autre mode de réalisation visible sur la figure 9, chaque bras 16 se présente sous la forme d'une plaque disposée dans un plan perpendiculaire à l'axe de pivotement 14 et qui comprend un trou de passage 16P1 traversé par l'axe de pivotement 14, le bras 16 pouvant pivoter librement par rapport à l'axe de pivotement 14. Selon ce mode réalisation, le bras 16 comprend un trou de passage 16P2 traversé par le ballast 18, le bras 16 et le ballast 18 étant reliés par une liaison rigide ou pivotante.

A titre d'exemple, chaque bras 16 est en polyéthylène haute densité PEHD.

Bien entendu, l'invention n'est pas limitée à ce mode de réalisation. D'autres solutions sont envisageables pour le bras 16 et pour les liaisons entre le bras 16 et le ballast 18 et entre le bras 16 et l'axe de pivotement 14.

Comme illustré sur les figures 5 et 6, grâce au bras 16, le ballast 18 se déplace entre une position basse P1, située sensiblement à l'aplomb et sous l'axe de pivotement 14, et une position haute P3, décalée par rapport à l'axe de pivotement 14 et sensiblement dans le même plan horizontal que l'axe de pivotement 14. Selon la configuration illustrée sur les figures 5 et 6, chaque bras 16 effectue un mouvement de rotation, autour de l'axe de pivotement 14, d'à peu près un quart de tour. Les bras 16 disposés de part et d'autre de l'axe de pivotement 14 n'ont pas la même longueur pour que les ballasts descendent au maximum sans s'entrechoquer en fin de course.

Bien entendu, l'invention n'est pas limitée à cette configuration. Ainsi, la rotation du bras 16 autour de l'axe de pivotement 14 peut être supérieure ou inférieure à un quart de tour. De même, le ballast 18 peut ne pas être à l'aplomb de l'axe de pivotement en position basse et/ou le ballast 18 peut être décalé en hauteur par rapport à l'axe de pivotement 14 en position haute. L'axe de pivotement 14 peut être immergé d'une certaine profondeur pour augmenter l'amplitude du mouvement de rotation du bras 16 et donc l'amplitude du phénomène de roulage.

Chaque ballast 18 supporte plusieurs contenants 20 répartis sur la longueur du ballast 18. Chaque contenant 20 est relié au ballast par au moins une liaison 24 démontable pour pouvoir détacher chaque contenant 20 afin de le transférer vers une zone de tri et de conditionnement des huîtres.

Selon un mode de réalisation, un même contenant 20 est relié directement ou indirectement à un des ballasts 18 par au moins deux liaisons 24 par exemple disposées à proximité de chacune des extrémités du contenant 20.

Selon un mode de réalisation visible sur les figures 5 et 6, chaque liaison 24 est configurée pour conserver immobile chaque contenant 20 par rapport au ballast 18 auquel il est rattaché. De préférence, le contenant 20 est attaché au ballast 18 de sorte à être positionné au-dessus du ballast 18 lorsque ce dernier est situé à la surface de l'eau. Ainsi, chaque contenant 20 est disposé sur le côté du ballast 18 lorsque ce dernier est en position basse P1 et au-dessus du ballast 18 lorsque ce dernier est en position haute P3. Bien entendu, l'invention n'est pas limitée à ce positionnement du contenant 20 par rapport au ballast 18. Ainsi, en position haute P3, le contenant 20 peut être décalé par rapport à la verticale, la droite passant par les centres du contenant et du ballast formant par exemple un angle de 45° avec la direction horizontale.

Selon d'autres modes de réalisation visibles sur les figures 9 à 14, les contenants 20 ne sont pas directement reliés au ballast 18 et sont mobiles par rapport à ce dernier.

Selon un mode de réalisation visible sur les figures 9 à 14, la liaison 24 entre au moins un contenant 20 et un ballast 18 comprend :
- au moins deux pattes 28, chacune étant disposée dans un plan perpendiculaire à la direction longitudinale et présentant une extrémité qui est reliée de manière rigide au ballast 18, et
- une tringle 30, supportée par les pattes 28, qui s'étend selon une direction parallèle à la direction longitudinale.

Selon cette configuration, chaque contenant 20 est relié à l'une des tringles 30 par des liens 32 souples ou rigides, en position fixe ou pendulaire.

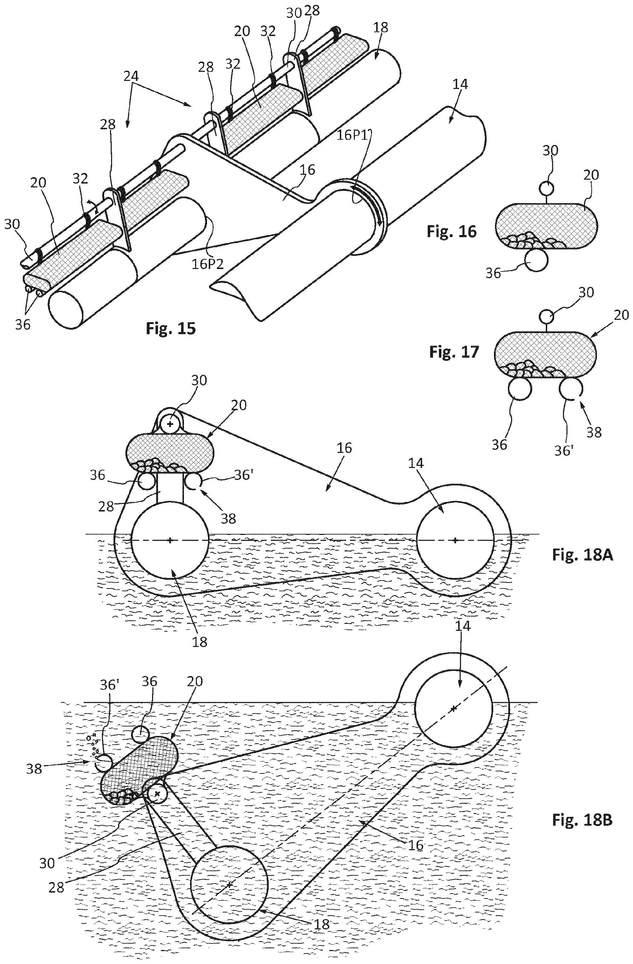

Selon un mode de réalisation visible sur les figures 9 et 15, les tringles 30 sont également supportées par les bras 16. Selon une première variante, chaque ballast 18 est associé à une seule tringle 30 qui s'étend parallèlement au ballast 18 sur quasiment toute sa longueur et qui traverse les bras 16. En variante, chaque ballast 18 est associé à plusieurs tringles dont les extrémités sont reliées aux bras 16. Selon ce mode de réalisation, si les tringles 30 étaient suffisamment rigides, les pattes 28 pourraient être supprimées.

Selon le mode de réalisation visible sur les figures 9 et 15, les contenants 20 ne sont pas reliés directement au(x) ballast(s) 18 mais indirectement par l'intermédiaire des bras 16 et/ou des pattes 28.

De préférence, le dispositif d'élevage comprend :
- au moins un premier axe de pivotement 14,
- au moins un deuxième axe de pivotement, soit le ballast 18, soit la tringle 30, relié au premier axe de pivotement 14 et configuré pour pivoter autour du premier axe de pivotement 14 en fonction du remplissage ou de la vidange du ballast 18,
- au moins un contenant 20 relié au deuxième axe de pivotement autour duquel il peut pivoter librement.

Ainsi, le mouvement de pivotement autour du premier axe de pivotement 14 permet d'obtenir le phénomène d'exondation alors que la combinaison des deux mouvements de pivotement autour des premier et deuxième axes de pivotement permet d'obtenir un phénomène de roulage plus efficace.

Le contenant 20 peut être relié au ballast 18 par un lien 34 pour l'empêcher de se désolidariser du ballast 18 en position basse, comme illustré sur les figures 10 et 11.

En fonction de la distance entre le ballast 18 et la tringle 30, le contenant 20 peut être plus ou moins haut en position haute, comme illustré par les figures 10 et 12.

Il est possible de moduler la hauteur du contenant 20 en modifiant la longueur des liens ou en modifiant la position angulaire des pattes 28 par rapport au bras 16, comme illustré sur les figures 13 et 14.

Quel que soit le mode de réalisation de la liaison entre le contenant et le ballast, chaque contenant 20 doit être au moins partiellement émergé, et de préférence totalement émergé, pour obtenir un phénomène d'exondation lorsque le ballast est en position haute P3.

Quel que soit le mode de réalisation des liaisons 24, les contenants 20 peuvent être positionnés en position haute soit sur le côté du ballast 18 comme illustré sur les figures 1, 3, 9 et 10, soit au-dessus du ballast 18, comme illustré sur les figures 4A à 4C, 5, 6 12 et 13. Selon un mode de réalisation, le dispositif d'élevage comprend plusieurs poteaux 26 verticaux fixes, implantés sur le fond 12F du bassin d'élevage et disposés en quinconce de part et d'autre de l'axe de pivotement 14 pour l'immobiliser horizontalement et lui permettre de montée et descendre.

Selon une première variante visible sur la figure 4, l'axe de pivotement 14 est positionné à une hauteur constante au-dessus du fond 12F. Dans ce cas, l'axe de pivotement 14 est relié aux poteaux 26 de manière à être immobile à la surface de l'eau. Cette première variante convient lorsque la hauteur d'eau est sensiblement constante.

Selon une deuxième variante visible sur la figure 1, l'axe de pivotement est flottant. Il est immobilisé selon une direction perpendiculaire à la direction longitudinale. A titre d'exemple et de manière non-limitative, l'axe de pivotement 14 est immobilisé par rapport aux poteaux 26 de manière à pouvoir coulisser sur la hauteur des poteaux 26. Ainsi, selon cette deuxième variante, l'axe de pivotement 14 est toujours positionné à la surface de l'eau. Cette deuxième variante est plus adaptée pour des zones de production avec des hauteurs d'eau variables en raison notamment des marées ou du taux de remplissage des claires.

Selon une troisième variante, l'axe de pivotement 14 est relié aux poteaux 26 de manière à être toujours maintenu immergé, à une profondeur constante, pour augmenter l'amplitude de rotation des bras 16.

Selon un autre mode de réalisation, au moins un corps mort est relié à l'axe de pivotement 14 par un bout passant par un système de boucle ou de poulie positionné en dessous de l'axe de pivotement 14 et finissant par un contre poids, permettant ainsi d'avoir en permanence l'axe de pivotement 14 en position parfaitement à la verticale au contre poids.

Selon un mode de réalisation, l'axe de pivotement 14 est un tube (par exemple en polyéthylène haute densité PEHD) fermé à ses extrémités de manière étanche et rempli d'air. Pour donner un ordre de grandeur, l'axe de pivotement 14 a un diamètre d'environ 150 mm. D'autres solutions sont envisageables pour obtenir un axe de pivotement 14 flottant.

Selon une configuration privilégiée, un dispositif d'élevage comprend un axe de pivotement 14 et deux ballasts 18, 18' disposés de part et d'autre de l'axe de pivotement 14 et reliés par des bras 16 à l'axe de pivotement 14. Ainsi, pour chaque axe de pivotement 14, la zone d'élevage est divisée en deux demi-espaces situés de part et d'autre d'un plan vertical passant par l'axe de pivotement 14, un premier ballast 18 étant mobile dans un premier demi-espace et un deuxième ballast 18' étant mobile dans un deuxième demi-espace.

Cette configuration permet de réduire le nombre d'axes de pivotement 14.

Les mouvements des ballasts 18, 18' peuvent être synchrones, comme illustré sur les figures 4B et 4C, ou non, comme illustré sur la figure 4A.

Pour assurer le remplissage et/ou la vidange des ballasts, l'installation 10 comprend au moins un système d'alimentation en air sous pression, comme un automate, des électrovannes un compresseur ou surpresseur et un réseau d'air pour relier les différents ballasts 18, 18' au système d'alimentation en air sous pression.

De préférence, l'installation comprend un automate pour contrôler les phases de remplissage et de vidange des différents ballasts.

Avantageusement, le système d'alimentation en air sous pression des ballasts 18, 18' est réversible et permet de remplir les ballasts 18, 18' en air, lors de la phase montante et d'aspirer l'air présent dans les ballasts 18, 18' lors de la phase descendante. Cette configuration permet une meilleure maîtrise de la vitesse de descente et de montée des ballasts.

Le principe de fonctionnement du dispositif d'élevage est maintenant décrit au regard des figures 4A à 4C, 5 et 6.

Lorsque le ballast 18 est rempli d'eau, le poids des contenants 20 reliés au ballast 18 provoque le déplacement et l'immobilisation du ballast dans la position basse P1, les contenants et les huîtres sont en position immergée. Pour remonter les contenants 20 en position haute P3, de l'air est injecté dans le ballast 18. Au fur et à mesure de la vidange de l'eau chassée par l'air sous pression, le ballast 18 remonte jusqu'à la surface de l'eau en passant progressivement des positions P1, P2 à P3. Dans la position haute P3, les contenants 20 et les huîtres sont situés hors de l'eau. Lorsque le ballast 18 n'est plus alimenté en air sous pression, l'air s'échappe via une électrovanne ouverte et le ballast 18 coule progressivement en passant des positions P3, P4 à P1.

Selon l'invention, lors du mouvement de haut en bas ou de bas en haut, les contenants 20 effectuent un mouvement de rotation autour de l'axe de pivotement 14. Ce mouvement de rotation combiné à la forme courbe des contenants provoque un phénomène de roulage comme illustré sur les figures 5 et 6. Lorsque le mouvement de rotation va de bas en haut, les huîtres sont incitées à rouler dans un premier sens. Lorsque le mouvement de rotation va de haut en bas, les huîtres sont incitées à rouler dans un deuxième sens, opposé au premier.

Ce phénomène de roulage peut être modulé en fonction de la longueur des bras 16, de l'amplitude du mouvement des bras 16, de la forme de la section du contenant, de la vitesse de pivotement des bras 16 autour de l'axe de pivotement 14 dans le sens de la montée et le sens de la descente.

De préférence, tous les bras reliés à un même ballast ont la même longueur, supérieure ou égale à 0,5m. Idéalement, les bras ont chacun une longueur de l'ordre de 1 m. Plus le bras 16 sera long et plus les huîtres seront roulées.

Selon un mode de fonctionnement, les vitesses de rotation dans le sens de la montée et dans le sens de la descente sont identiques. En variante, elles peuvent être différentes pour que le phénomène de roulage dans le premier sens soit différent du phénomène de roulage dans le deuxième sens. A titre d'exemple, les vitesses de rotation dans le sens de la montée et le sens de la descente sont de l'ordre de 30 secondes pour 1 m de hauteur.

Les durées journalières des phénomènes de roulage et d'exondation et la fréquence de ces phénomènes seront ajustées en fonction des qualités des huîtres souhaitées.

A titre d'exemple, les huîtres sont en position immergée, comme illustré sur la figure 4C, en position hors de l'eau en phase d'exondation, comme illustré sur la figure 4B, et en phase de roulage, comme illustré sur la figure 4A, grâce à des mouvements de rotation des bras 16 autour de l'axe de pivotement 14. Pour chaque axe de pivotement, les mouvements de rotation des bras des deux ballasts 18, 18' peuvent être déphasés ou non.

L'invention permet de combiner un phénomène d'exondation qui consiste à faire sortir les huîtres hors de l'eau pendant une période déterminée en gonflant les ballasts 18, 18' constamment et un phénomène de roulage qui consiste à faire rouler les huîtres dans le contenant 20 grâce à l'alternance de gonflage et de vidange. La combinaison de ces deux phénomènes permet de recréer de façon artificielle et de manière contrôlée l'action des vagues, du vent, du courant et des marées dans un bassin d'élevage clos et de renforcer cette action. Le phénomène de roulage rend les coquilles des huîtres plus lisses et dépourvues de dentelles. Le stress procuré par les phénomènes d'exondation et de roulage renforce le muscle de l'huître et contribue à ce que les huîtres développent une coquille plus épaisse avec une nacre plus blanche et brillante. En plus de l'amélioration de la qualité esthétique et organoleptique des huîtres, cela permet de pouvoir les transporter et de les conserver à l'air libre pendant des périodes prolongées grâce à leur capacité « hermétique » accentuée.

La rigidité des contenants 20 et leurs sections oblongues favorisent le phénomène de roulage.

La technique d'élevage d'huîtres selon l'invention permet d'obtenir une production plus stable, plus fiable et mieux contrôlée avec une qualité constante pour les huîtres.

Selon un autre aspect, la technique d'élevage selon l'invention permet de supprimer les tâches fastidieuses de retournement des poches d'huîtres.

Elle permet également de supprimer les phénomènes de parasitisme externe et d'encrassement, appelés bio-fouling, ce qui permet de supprimer les phases de nettoyage et de détroquage et de diminuer le taux de chambrage et d'infestation de balanes et autres mollusques sur la coquille des huîtres ainsi élevées.

Selon des configurations visibles sur les figures 15 à 17, 18A et 18B, le dispositif comprend, en plus des ballasts 18, au moins un flotteur 36 solidaire d'un contenant 20. Ainsi, chaque contenant 20 comprend au moins un flotteur 36. Chaque flotteur 36 a la forme d'un cylindre et s'étend parallèlement à la direction des ballasts 18, 18', sur quasiment toute la longueur du contenant 20 auquel il est relié. Les flotteurs 36 sont reliés au contenant par tout moyen approprié. Chaque flotteur 36 est immobile par rapport au contenant 20 auquel il est relié. Selon une configuration visible sur la figure 16, le contenant comprend un unique flotteur 36. Ce flotteur 36 peut être étanche et être rempli d'air continûment, comme illustré sur la figure 16, ou comprendre au moins un trou 38 permettant au flotteur de se remplir ou se vider d'eau plus ou moins vite en fonction de la section du ou des trou(s) 38.

Selon des configurations visibles sur les figures 15, 17, 18A et 18B, chaque contenant comprend au moins deux flotteurs 36, 36', de préférence exactement deux flotteurs 36, 36'. Selon un mode de réalisation visible sur la figure 15, chaque contenant 20 comprend deux flotteurs 36, 36' qui sont étanches et qui sont remplis d'air continûment.

Selon un mode de réalisation visible sur les figures 17, 18A et 18B, chaque contenant 20 comprend un premier flotteur 36 qui est étanche et qui est rempli d'air continûment et un deuxième flotteur 36' qui comprend au moins un trou 38 permettant au flotteur de se remplir ou vider d'eau plus ou moins vite.

Selon un autre mode de réalisation (non représenté), chaque contenant 20 comprend deux flotteurs qui comportent chacun au moins un trou.

Selon le mode de réalisation visible sur les figures 17, 18A et 18B, chaque contenant 20 comprend de part et d'autre d'un plan passant par le deuxième axe de pivotement (formé par la tringle 30 ou le ballast 18) un premier flotteur 36 étanche et un deuxième flotteur 36' pourvu d'au moins un trou 38.

Pour chaque flotteur pourvu d'au moins un trou 38, la section du ou des trous 38 est ajusté de manière à contrôler la durée de remplissage ou la vidange du flotteur 36'.

Selon un principe de fonctionnement visible sur les figures 18A et 18B, la section des trous 38 est ajustée de manière à ce que la vitesse de remplissage du flotteur 36' soit moins rapide que celle du ballast 18.

Cette différence de vitesse de remplissage permet de favoriser le mouvement de rotation du contenant 20 autour du deuxième axe de pivotement (la tringle 30) ce qui contribue à améliorer le phénomène de roulage.

Le fait de prévoir un premier flotteur 36 étanche et rempli continûment d'air et un deuxième flotteur 36 pourvu d'au moins un trou 38 permet d'obtenir un déséquilibre et d'initier un mouvement de rotation autour du deuxième axe de pivotement

## Revendications

1. Dispositif d'élevage de mollusques, notamment d'huîtres, comprenant des contenants (20) configurés pour contenir des mollusques et reliés à au moins un ballast (18), **caractérisé en ce qu'**il comprend au moins un premier axe de pivotement (14) horizontal, parallèle à une direction longitudinale du dispositif, et au moins deux bras (16) rigides qui relient le ballast (18) qui s'étend selon une direction parallèle à la direction longitudinale, et l'axe de pivotement (14) de sorte qu'un remplissage ou une vidange du ballast (18) provoque une rotation des bras (16) autour du premier axe de pivotement (14) et un phénomène de roulage des mollusques dans les contenants (20).

2. Dispositif selon la revendication 1, **caractérisé en ce qu'**il comprend au moins un deuxième axe de pivotement (30) relié au premier axe de pivotement (14) et configuré pour pivoter autour du premier axe de pivotement (14) en fonction du remplissage ou de la vidange du ballast (18), au moins un contenant (20) étant relié au deuxième axe de pivotement (30) autour duquel il peut pivoter librement.

3. Dispositif selon l'une des revendications précédentes, **caractérisé en ce que** chaque contenant (20) comprend au moins un flotteur (36).

4. Dispositif selon la revendication précédente, **caractérisé en ce que** chaque contenant (20) comprend un premier flotteur (36) étanche et continûment rempli d'air ainsi qu'un deuxième flotteur (36') pourvu d'au moins un trou (38) permettant au flotteur (36') de se remplir ou se vider d'eau plus ou moins vite en fonction de la section du ou des trou(s) (38).

5. Dispositif selon la revendication précédente, **caractérisé en ce que** chaque contenant (20) comprend de part et d'autre d'un plan passant par le deuxième axe de pivotement le premier flotteur (36) étanche et le deuxième flotteur (36') pourvu d'au moins un trou (38).

6. Dispositif selon la revendication 4 ou 5, **caractérisé en ce que** la section du ou des trou(s) (38) de chaque flotteur (36') est ajustée de manière à ce que la vitesse de remplissage du flotteur (36') soit moins rapide que celle du ballast (18).

7. Dispositif selon l'une des revendications précédentes, **caractérisé en ce que** chaque bras (16) a une longueur supérieure ou égale à 0,5 m.

8. Dispositif selon l'une des revendications précédentes, **caractérisé en ce que** chaque contenant (20) comprend, dans un plan perpendiculaire à la direction longitudinale, une section avec un profil courbe pour favoriser le phénomène de roulage.

9. Dispositif selon la revendication précédente, **caractérisé en ce que** les contenants (20) sont rigides et ont une section circulaire, ovale ou oblongue.

10. Dispositif selon l'une des revendications précédentes, **caractérisé en ce qu'**il comprend deux ballasts (18, 18') disposés de part et d'autre du premier axe de pivotement (14) et reliés par leurs bras respectifs (16) au premier axe de pivotement (14).

11. Dispositif selon l'une des revendications précédentes, **caractérisé en ce que** le premier axe de pivotement (14) est flottant et immobilisé selon une direction perpendiculaire à la direction longitudinale.

12. Procédé d'élevage d'huîtres utilisant un dispositif d'élevage selon l'une de revendications précédentes, les huîtres étant conditionnées dans des contenants (20) reliés à au moins un ballast (18), orienté selon une direction longitudinale, mobile entre une position haute et une position basse lors d'un remplissage ou d'une vidange du ballast (18), **caractérisé en ce que** le ballast (18) pivote autour d'un premier axe de pivotement (14) parallèle à la direction longitudinale pour générer un phénomène de roulage.

13. Procédé selon la revendication précédente, **caractérisé en ce que** les contenants sont hors de l'eau lorsqu'ils sont positionnés en position haute pour générer un phénomène d'exondation.

14. Procédé selon la revendication 12 ou 13, **caractérisé en ce que** les contenants (20) pivotent librement autour d'un deuxième axe de pivotement (30) qui pivotent autour du premier axe de pivotement (14).

## Patentansprüche

1. Vorrichtung zur Aufzucht von Mollusken, insbesondere Austern, mit Behältern (20), die so gestaltet sind, dass diese Mollusken enthalten, und die mit wenigstens einem Ballast (18) verbunden sind, **dadurch gekennzeichnet, dass** sie wenigstens eine erste horizontale Schwenkachse (14) aufweist, die parallel zu einer Längsrichtung der Vorrichtung verläuft, und wenigstens zwei starre Arme (16) aufweist, die den Ballast (18), der sich in einer Richtung parallel zur Längsrichtung erstreckt, und die Schwenkachse (14) so verbinden, dass ein Füllen oder Entleeren des Ballasts (18) eine Drehung der Arme (16) um die erste Schwenkachse (14) und ein Phänomen des Bewegens der Mollusken in den Behältern (20) bewirkt.

2. Vorrichtung nach Anspruch 1, **dadurch gekennzeichnet, dass** diese wenigstens eine zweite Schwenkachse (30) aufweist, die mit der ersten Schwenkachse (14) verbunden und so eingerichtet ist, dass sie um die erste Schwenkachse (14) in Abhängigkeit von der Füllung oder Entleerung des Ballasts (18) schwenkt, wobei wenigstens ein Behälter (20) mit der zweiten Schwenkachse (30) verbunden ist, um die er frei schwenken kann.

3. Vorrichtung nach einem der vorhergehenden Ansprüche, **dadurch gekennzeichnet, dass** jeder Behälter (20) wenigstens einen Schwimmer (36) aufweist.

4. Vorrichtung nach dem vorhergehenden Anspruch, **dadurch gekennzeichnet, dass** jeder Behälter (20) einen ersten dichten und kontinuierlich mit Luft gefüllten Schwimmer (36) sowie einen zweiten Schwimmer (36') aufweist, der mit wenigstens einem Loch (38) versehen ist, das es dem Schwimmer (36') ermöglicht, sich je nach dem Querschnitt des Lochs oder der Löcher (38) mehr oder weniger schnell mit Wasser zu füllen oder zu entleeren.

5. Vorrichtung nach dem vorhergehenden Anspruch, **dadurch gekennzeichnet, dass** jeder Behälter (20) beidseits einer Ebene durch die zweite Schwenkachse den ersten wasserdichten Schwimmer (36) und den zweiten Schwimmer (36'), der mit wenigstens einem Loch (38) versehen ist, aufweist.

6. Vorrichtung nach Anspruch 4 oder 5, **dadurch gekennzeichnet, dass** der Querschnitt des Lochs oder der Löcher (38) in jedem Schwimmer (36') so eingestellt ist, dass die Füllgeschwindigkeit des Schwimmers (36') langsamer ist als die des Ballasts (18).

7. Vorrichtung nach einem der vorhergehenden Ansprüche, **dadurch gekennzeichnet, dass** jeder Arm (16) eine Länge von 0,5 m oder mehr hat.

8. Vorrichtung nach einem der vorhergehenden Ansprüche, **dadurch gekennzeichnet, dass** jeder Behälter (20) in einer Ebene senkrecht zur Längsrichtung einen Abschnitt mit einem gekrümmten Profil aufweist, um das Phänomen des Bewegens zu unterstützen.

9. Vorrichtung nach dem vorhergehenden Anspruch, **dadurch gekennzeichnet, dass** die Behälter (20) starr sind und einen kreisförmigen, ovalen oder länglichen Querschnitt haben.

10. Vorrichtung nach einem der vorhergehenden Ansprüche, **dadurch gekennzeichnet, dass** sie zwei Ballaste (18, 18') aufweist, die beidseits der ersten Schwenkachse (14) angeordnet sind und durch ihre jeweiligen Arme (16) mit der ersten Schwenkachse (14) verbunden sind.

11. Vorrichtung nach einem der vorhergehenden Ansprüche, **dadurch gekennzeichnet, dass** die erste Schwenkachse (14) schwimmend und in eine zur Längsrichtung rechtwinklige Richtung unbeweglich ist.

12. Verfahren zur Aufzucht von Austern unter Verwendung einer Vorrichtung zur Aufzucht nach einem der vorhergehenden Ansprüche, wobei die Austern in Behältern (20) gepackt sind, die mit wenigstens einem Ballast (18) verbunden sind, der in einer Längsrichtung ausgerichtet ist und der bei einer Füllung oder Entleerung des Ballasts (18) zwischen einer oberen Position und einer unteren Position beweglich ist, **dadurch gekennzeichnet, dass** der Ballast (18) um eine erste Schwenkachse (14) parallel zur Längsrichtung schwenkt, um ein Phänomen des Bewegens zu erzeugen.

13. Verfahren nach dem vorhergehenden Anspruch, **dadurch gekennzeichnet, dass** die Behälter außerhalb des Wassers sind, wenn sie in der oberen Position positioniert werden, um ein Phänomen des Trockenfallens zu erzeugen.

14. Verfahren nach Anspruch 12 oder 13, **dadurch gekennzeichnet, dass** die Behälter (20) frei um eine zweite Schwenkachse (30) schwenken, die um die erste Schwenkachse (14) schwenkt.

## Claims

1. Device for farming molluscs, particularly oysters, comprising containers (20) configured to contain molluscs and connected to at least one ballast (18), **characterized in that** it comprises at least a first pivot axle (14) which is horizontal, parallel to a longitudinal direction of the device, and at least two rigid arms (16) which connect the ballast (18) which extends in a direction parallel to the longitudinal direction, and the pivot axle (14) so that a filling or emptying of the ballast (18) causes the arms (16) to rotate about the first pivot axle (14) and causes a phenomenon of rolling of the molluscs in the containers (20).

2. Device as claimed in claim 1, **characterized in that** it comprises at least a second pivot axle (30) connected to the first pivot axle (14) and configured to pivot about the first pivot axle (14) according to the filling or the emptying of the ballast (18), at least one container (20) being connected to the second pivot axle (30) about which it can pivot freely.

3. Device as claimed in one of the preceding claims, **characterized in that** each container (20) comprises at least one float (36).

4. Device as claimed in the preceding claim, **characterized in that** each container (20) comprises a fluidtight first float (36) continuously full of air and a second float (36') provided with at least one hole (38) allowing the float (36') to fill with or empty of water at a rate dependent on the cross section of the hole(s) (38).

5. Device as claimed in the preceding claim, **characterized in that** each container (20) comprises, on each side of a plane passing through the second pivot axle, the fluidtight first float (36) and the second float (36') provided with at least one hole (38).

6. Device as claimed in claim 4 or 5, **characterized in that** the cross section of the hole(s) (38) in each float (36') is adjusted so that the rate of filling of the float (36') is not as rapid as that of the ballast (18).

7. Device as claimed in one of the preceding claims, **characterized in that** each arm (16) has a length greater than or equal to 0.5 m.

8. Device as claimed in one of the preceding claims, **characterized in that** each container (20) comprises, in a plane perpendicular to the longitudinal direction, a cross section with a curved profile in order to encourage the phenomenon of rolling.

9. Device as claimed in the preceding claim, **characterized in that** the containers (20) are rigid and have a circular, oval or oblong section.

10. Device as claimed in one of the preceding claims, **characterized in that** it comprises two ballasts (18, 18') arranged on either side of the pivot axle (14) and connected by their respective arms (16) to the first pivot axle (14).

11. Device as claimed in one of the preceding claims, **characterized in that** the pivot axle (14) is able to float and is immobilized in a direction perpendicularto the longitudinal direction.

12. Method for farming oysters using a farming device as claimed in one of the preceding claims, the oysters being packed in containers (20) connected to at least one ballast (18), which is oriented in a longitudinal direction, able to move between a high position and a low position during a filling or an emptying of the ballast (18), **characterized in that** the ballast (18) pivots about a first pivot axle (14), parallel to the longitudinal direction, in order to generate a phenomenon of rolling.

13. Method as claimed in the preceding claim, **characterized in that** the containers are out of the water when positioned in the high position in order to generate a phenomenon of exposure.

14. Method as claimed in claim 12 or 13, **characterized in that** the containers (20) pivot freely about a second pivot axle (30) which pivot about the first pivot axle (14).
